# EUROPEAN PATENT APPLICATION

(11) **EP 2 128 502 A2**
(43) Date of publication of application: **02.12.2009**
(21) Application number: 09155727.2
(22) Date of filing: 20.03.2009
(51) Int. Cl.: F16K 5/02, F16K 5/04

(54) **Stopcock for laboratory glassware**

(30) Priority: 30.04.2008 GB 0807886
(71) Applicant: Poulten & Graf Ltd, Barking Essex IG11 0AS (GB)
(72) Inventor: Hawkins, James, Barking, Essex IG11 0AS (GB)
(74) Representative: Evens, Paul Jonathan

(57) **Abstract**

A stopcock (10) for use with a glass cane, comprising: a body (12) for attachment to one end of a glass cane, the body having a channel (22) therethrough which in use communicates with fluid in a glass cane when the body is attached to one end thereof; and a key (14) rotatably mounted in the channel (22), the key (14) being configured to allow fluid to flow through the channel (22) when in one orientation relative to the body (12) and to prevent fluid flowing through the channel (22) when in another orientation, **characterized in that** the key (14) and body (12) have interengageable profiles (32, 34) which are configured to retain the key (14) in the body (12) when interengaged.

## Description

The present invention relates to laboratory glassware, and particularly, but not exclusively to a stopcock for laboratory glassware.

Burettes are one type of laboratory volumetric product which fall within the term laboratory glassware. A burette comprises a graduated glass cane with a stopcock to control the release of fluid from the glass cane. There are different qualities of glass cane, and numerous types of stopcock ranging from a glass barrel with a glass or ptfe key to a fully removable ptfe stopcock. The glass cane of larger burettes will typically include a neck region where internal bore cross section reduces in order to restrict fluid flowing to the stopcock. The neck region is conventionally formed by locally heating the glass cane until it softens and then manipulating it until the desired shape is achieved. This requires considerable time and skill.

The present applicant has appreciated that existing stopcocks and burettes are relatively complex in design and the present invention is aimed at simplifying the designs in order to reduce costs.

In accordance with a first aspect of the present invention, there is provided a stopcock for use with a glass cane, comprising: a body for attachment to one end of a glass cane, the body having a channel therethrough which in use communicates with fluid in a glass cane when the body is attached to one end thereof; and a key rotatably mounted in the channel, the key being configured to allow fluid to flow through the channel when in one orientation relative to the body and to prevent fluid flowing through the channel when in another orientation, characterized in that the key and body have interengageable profiles which are configured to retain the key in the body when interengaged.

The present applicant has appreciated that stopcock design may be simplified by using the interengaging profiles to releasably mount the key in the body. This may help to reduce either overall number of component parts which need to be assembled together, or the complexity of the way in which those component parts are assembled together.

The interengagable profiles may be configured to engage with a snap fit action. In this way, the key may be releasably mounted in the body with a simple pressure/pushing action. For example, the interengagable profiles may comprise a groove and a corresponding rib which is a snug fit in the groove when the key is rotatably mounted in the body. The groove may be annular to allow the key to rotate through 360° in the body. The rib may also be annular. The rib may be part of the key, and the groove may be formed in the body.

The interengageable profiles may be concealed from view when the key is rotatably mounted in the body. Thus, one of the interengageable profiles may form part of an inner peripheral surface of the body.

The stopcock may be formed from at least one moulded component. For example, the body may be formed from a single moulded component. One of the interengageable profiles may be integrally formed in the at least one moulded component. The at least one component may comprise a chemically resistant plastics material, such as PVDF.

The body of the stopcock may further comprise a push-fit connector for attachment to one end of the glass cane. The push-fit connector may comprise a wall defining a recess with a substantially cylindrical surface which is a snug fit around one end of a glass cane. The glass canes tend to be registered tubing (i.e. manufactured to tight tolerances) of one or more standard sizes, so the recess is shaped to fit accordingly. The substantially cylindrical surface of the recess may comprise one or more ribs (*e*.*g*. annular ribs) for sealing engagement with a glass cane when attached to the body.

The stopcock may further comprise a jet connector for releasably connecting a jet to the body for controlling flow of fluid when the key is in an orientation to allow fluid flow through the channel. The jet is typically a glass tube which tapers at one end to define a nozzle with a reduced bore to achieve a certain rate of fluid flow therethrough. The jet connector may be releaseably attached to the body with a push-fit action. Thus the body may have a protuberant portion (*e*.*g*. frustoconical) which is a friction fit in a corresponding recess in one end of the jet connector. The jet connector may have another recess in its other end into which a jet is a friction fit.

There is also provided laboratory glassware, for example a burette, comprising a stopcock in accordance with the first aspect of the present invention.

In accordance with another aspect of the present invention there is provided a burette comprising: a glass cane part, a glass tube part with a smaller internal diameter than the glass cane part; and a connector axially connecting the glass cane part to the glass tube part, the connector comprising a body defining first and second sleeves, with the glass cane part being a friction fit in the first sleeve and the glass tube part being a friction fit in the second sleeve.

The present applicant has appreciated that the one-piece design of glassware in a conventional burette is potentially problematic in that if either the main part of the glass cane or its neck breaks, all the glassware must be replaced. The use of the connecter in accordance with the invention improves burette design and allows component parts to be interchanged more readily.

The connector may be partly or wholly made from a resilient plastics material, *e.g.* a chemically inert plastics material such as polypropylene. The plastics material may be sufficiently resilient to form a reliable fluid tight seal with the glass parts. At least one sleeve may include one or more annular ribs on its inner peripheral surface for improved sealing engagement with an outer surface of its respective glass part.

The burette according to the second aspect of the invention may be used in combination with the stopcock according to the first aspect of the present invention. Alternatively, the glass tube part may be part of a stopcock (*e.g*. with a glass barrel).

Embodiments of the invention will now be described by way of example, and with reference to the accompanying figures, in which:
Figure 1 is an exploded perspective view of a stopcock embodying the present invention;
Figure 2 is a partial cross-sectional view of the stopcock of Figure 1, along a first plane;
Figure 3 is another cross-sectional view of the stopcock of Figure 1, along a second plane which is perpendicular to the first plane of Figure 2;
Figure 4 shows a side view of a connecter for use in a burette according to a second aspect of the invention; and
Figure 5 shows a cross-section view of the connecter of Figure 4.

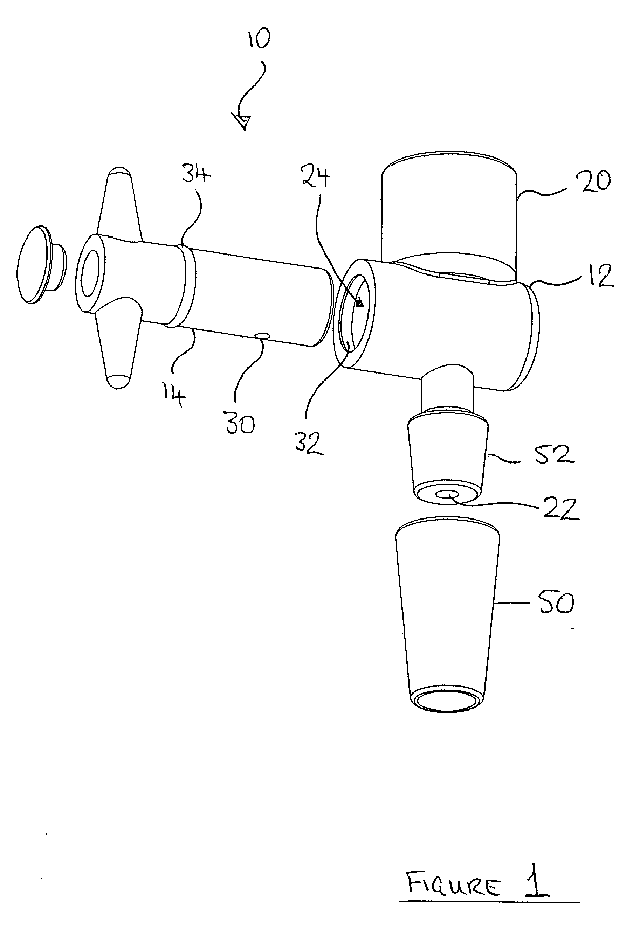

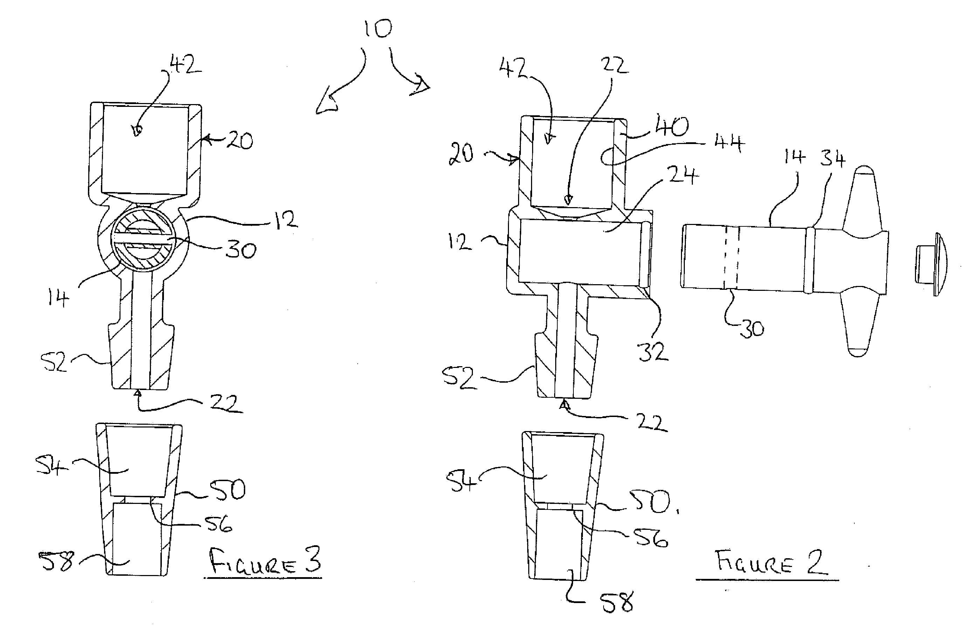

As shown in Figures 1-3, a stopcock (10) comprises a body (12) and a key 14 which in use is rotatably mounted in the body (12). The body (12) has a push-fit connecter (20) for attachment to one end of a glass cane (not shown), and has a channel (22) extending through the body (12) which in use communicates with fluid in a glass cane attached to the push-fit connecter (20). The channel (22) includes a blind bore (24) for rotatably receiving the key (14). When rotatably received in the blind bore (24) the key (14) will block fluid flow through the channel (22) unless a passageway (30) in the key (14) itself is registered with opposing sides of channel (22). The body (12) and key (14) have interengageable profiles in the form of annular groove (32) and annular rib (34). The interengageable profiles (32,34) interengage with a snap-fit action, retaining the key (14) in the blind bore (24) of the body (12) in such a way that passageway (30) is registrable with opposing sides of the channel (22) simply by rotating the key (14) relative to the body (12). Figure 3 shows the key 14 with passageway (30) not registered with channel (22), and hence the stopcock (10) is closed to fluid flow therethrough.

The push-fit connector (20) comprises a wall (40) defining a recess (42) with a substantially cylindrical surface (44) for engaging one end of a glass cane (not shown). The recess (42) is configured to be a friction fit with the glass cane (which is registered tubing and thus has a standard outer diameter). The substantially cylindrical surface (44) has one or more annular ribs (not shown) to ensure a fluid-tight seal.

The stopcock (10) may further comprise a jet connector (50) for releasably connecting a glass jet (not shown) to the body (12) for controlling rate of fluid flow from the body (12) when the key (14) is in an orientation to allow fluid through the channel (22). The body (12) has a frustoconical protuberance (52) at the downstream end of channel (22) which is a friction fit in a correspondingly shaped recess (54) in one end of the jet connector (50). The jet connector (50) has a waisted passageway (56) with another recess (58) in its other end, and into which the glass jet is a friction fit. The waisted passageway (56) registers with the channel (22) and the bore of the glass jet.

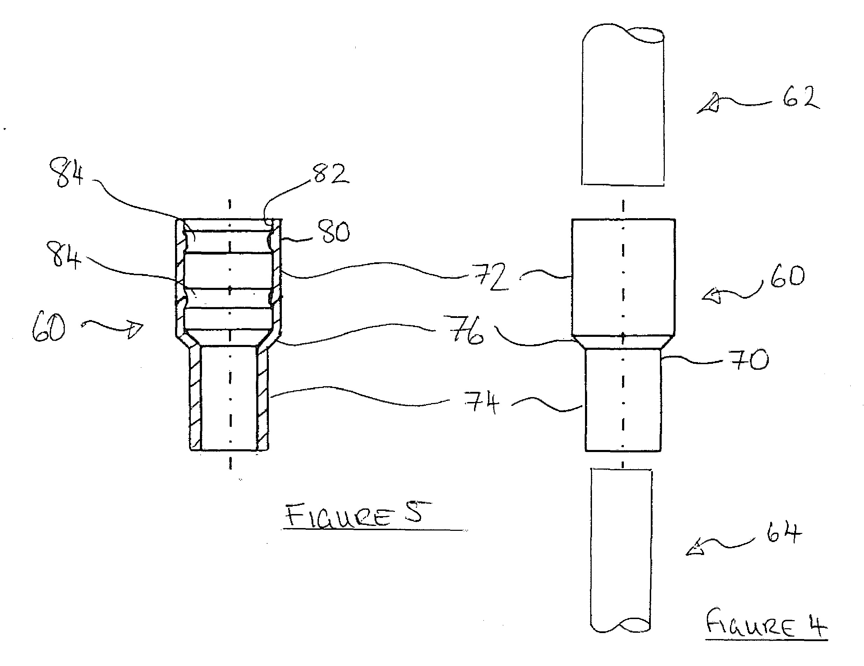

As shown in Figures 4 and 5, a connecter (60) is used to axially connect together a glass cane (62) and a glass tube (64) which are component parts of a burette (not shown). The glass tube (64) has a smaller bore (and external diameter) than the glass cane (62) and in use would be coupled to or form an integral part of a stopcock (not shown) at the downstream end of the burette. The connecter (60) comprises a body (70) defining first and second sleeves (72,74), with the glass cane (62) a friction fit in the first sleeve (72) and the glass tube (74) being a friction fit in the second sleeve (74). A frustoconical section (76) links the first and second sleeves (72,74) to provide a smooth transition from the larger diameter first sleeve (72) to the smaller diameter second sleeve (74).

The first sleeve (72) includes a wall (80) with a substantially cylindrical inner peripheral surface (82). The surface (82) has a pair of axially spaced, annular ribs (84) which are integral with the wall (80), although a single annular rib (84) may be used. The wall (80) (along with the rest of the body (70)) is formed from a resilient plastics material. The resilience of the plastics material, together with the ribs (84) encourages a fluid-tight seal with the glass cane (62).

## Claims

1. A stopcock for use with a glass cane, comprising: a body for attachment to one end of a glass cane, the body having a channel therethrough which in use communicates with fluid in a glass cane when the body is attached to one end thereof; and a key rotatably mounted in the channel, the key being configured to allow fluid to flow through the channel when in one orientation relative to the body and to prevent fluid flowing through the channel when in another orientation, **characterized in that** the key and body have interengageable profiles which are configured to retain the key in the body when interengaged.

2. A stopcock according to claim 1, in which the interengageable profiles are configured to engage with a snap-fit action.

3. A stopcock according to claim 2 in which the interengageable profiles comprise a groove and a corresponding rib which is a snug fit in the groove when the key is rotatably mounted in the body.

4. A stopcock according to any preceding claim, in which the interengageable profiles are concealed from view when the key is rotatably mounted in the body.

5. A stopcock according to any preceding claim, in which the body is formed from a single moulded component.

6. A stopcock according to claim 5, in which one of the interengageable profiles is integrally formed in the body.

7. A stopcock according to any preceding claim, in which the body further comprises a push-fit connector for attachment to one end of a glass cane.

8. A stopcock according to claim 7, in which the push-fit connector comprises a wall defining a recess with a substantially cylindrical surface into which one end of a glass cane is a friction fit.

9. A stopcock according to claim 8, in which the substantially cylindrical surfaces comprises one or more resilient annular ribs for sealing engagement with a glass cane when attached to the body.

10. A stopcock according to any preceding claim, further comprising a jet connector for releasably connecting a jet to the body for controlling flow of fluid therefrom when the key is in an orientation relative to the body to allow fluid flow through the channel.

11. A burette comprising: a glass cane part, a glass tube part with a smaller internal diameter than the glass cane part; and a connector axially connecting the glass cane part to the glass tube part, the connector comprising a body defining first and second sleeves, with the glass cane part being a friction fit in the first sleeve and the glass tube part being a friction fit in the second sleeve.

12. A burette according to claim 11, in which the glass tube part has a smaller external diameter than the glass cane part.

13. A burette according to claim 11 or 12, in which the body of the connecter comprises a chemically resistant plastics material.

14. A burette according to any one of claims 11 to 15, in which at least one sleeve comprises at least one rib for sealing engagement with its respective glass part.
